# EUROPÄISCHE PATENTSCHRIFT

(11) **EP 0 840 754 B1**
(45) Veröffentlichungstag und Bekanntmachung des Hinweises auf die Patenterteilung: **02.06.1999**
(21) Anmeldenummer: 96927041.2
(22) Anmeldetag: 18.07.1996
(51) Int. Cl.: C08F 2/24, C08F 230/08, C08J 3/12

(54) **REDISPERGIERBARE, VERNETZBARE DISPERSIONSPULVER**
REDISPERSABLE CROSS-LINKABLE DISPERSION POWDERS
DISPERSIONS PULVERULENTES RETICULABLES REDISPERSABLES

(30) Priorität: 21.07.1995 DE 19526759
(43) Veröffentlichungstag der Anmeldung: 13.05.1998
(73) Patentinhaber: Wacker-Chemie GmbH, 81737 München (DE)
(72) Erfinder: ECK, Herbert, D-84489 Burghausen (DE); JOHN, Peter, D-84489 Burghausen (DE); LUTZ, Hermann, D-84547 Emmerting (DE)
(74) Vertreter: Schuderer, Michael, Dr.
(86) Internationale Anmeldenummer: EP9603161
(87) Internationale Veröffentlichungsnummer: WO9704013

(56) Entgegenhaltungen:
- EP-A- 0 493 168
- EP-A- 0 601 518
- CH-A- 499 560
- DE-A- 4 402 408
- FR-A- 2 154 638

## Beschreibung

Die Erfindung betrifft in Wasser redispergierbare, vernetzbare Dispersionspulver-Zusammensetzungen, Verfahren zu deren Herstellung sowie deren Verwendung.

In Wasser redispergierbare Dispersionspulverzusammensetzungen auf der Basis von Homo- oder Copolymerisaten von ethylenisch ungesättigten Monomeren sind bekannt. Die Herstellung derartiger Dispersionspulverzusammensetzung erfolgt durch Sprühtrocknung der entsprechenden wäßrigen Kunststoffdispersionen in einem Heißen Luftstrom. Die Dispersionspulver eignen sich als Zusatzstoffe für hydraulische Bindemittel in der Baustoffindustrie, weiter werden derartige Produkte als Bindemittel in Beschichtungsmitteln oder Klebemitteln eingesetzt.

DE 4402408 A1 ist ein Dokument unter Artikel 54(3) EPÜ. Es beschreibt eine in Wasser redispergierbare Dispersionspulverzusammensetzung auf der Basis von wasserunlöslichen Homo- oder Copolymerisaten, die ähnlich wie die Dispersionspulver der vorliegenden Anmeldung ist, aber der pH- Wert von 4 bis 8 bei der Sprühtrocknung ist nicht beschrieben worden.

Vernetzbare Dispersionspulver sind aus der EP-A 149098 (US-A 4859751) bekannt. Die darin genannten Polymerisate enthalten N-Methylolacrylamid- oder N-Methylolmethacrylamid-Einheiten als vernetzende Funktionen. Die Nachteile derartiger Polymerisate bestehen zum einen darin, daß bei Vernetzung von N-Methylolamid-Einheiten Formaldehyd freigesetzt wird, vor allem aber vernetzen N-Methylolamid-haltige Polymerisate nur im Sauren, gegebenenfalls mittels Zugabe von Vernetzungskatalysator. Das Hauptanwendungsgebiet für vernetzbare, in Wasser redispergierbare Dispersionspulver liegt aber im Baubereich; hier muß die Vernetzung des Bindemittels vor allem auch im Alkalischen erfolgen können.

Es bestand daher die Aufgabe in Wasser redispergierbare, vernetzbare Dispersionspulver zur Verfügung zu stellen, welche auch im Basischen vernetzen, ohne aber bereits während der Herstellung der Dispersionspulver, das heißt während der Polymerisation oder Trocknung vollständig zu vernetzen.

Als auch im Basischen vernetzbare Vinylester-Copolymerisate sind solche bekannt, welche Vinylalkoxysilan-Einheiten enthalten. In der DE-A 3727181 (US-A 4959249) werden wäßrige Dispersionen von Polymerisaten beschrieben, welche als vernetzende Einheiten Vinyltrialkoxy- oder Alkylvinyldialkoxy-Silane enthalten. Dazu analoge wäßrige Copolymerisat-Dispersionen auf der Basis von Alkylacrylat-Polymerisaten mit Acryloxyalkyl(trialkoxy)silan-Einheiten sind aus der US-A 3706697 bekannt. Problematisch ist dabei, daß in Copolymerisat-Dispersionen mit Alkoxysilan-Einheiten als vernetzende Funktionen, diese leicht hydrolysiert werden und bereits bei niederen Temperaturen um 50°C durch Kondensation vernetzen.

Zur Verhinderung der vorzeitigen Vernetzung von wäßrigen Dispersionen Alkoxysilan-substituierter Copolymerisate wird in der EP-A 485057 vorgeschlagen, wäßrige Dispersionen zu verwenden, welche neben wasserunlöslichen, Alkoxysilan-substituierten Copolymerisaten noch polare, niedermolekulare Alkoxysilan-Copolymerisate enthalten. Die US-A 5214095 schlägt vor, zur Verbesserung der Lagerstabilität von wäßrigen Dispersionen von Alkoxysilan-funktionellen Polymerisaten, diese in Gegenwart von kondensierbaren Siloxan-Vorstufen zu polymerisieren, wobei Polysiloxane erhalten werden, welche die Alkoxysilan-Einheiten wie Schutzgruppen einhüllen können.

Die EP-A 493168 betrifft Dispersionspulver, welche durch Sprühtrocknung eines Gemisches aus wässriger Polymerdispersion und flüssigem Organopolysiloxan erhalten werden.

Die CH-A 499650 beschreibt ein Verfahren zur Herstellung von Dispersionspulvern auf Polyvinylesterbasis wobei, zur Verhinderung des Zusammenbackens der Polymerteilchen während der Sprühtrocknung, der zu trocknenden Polymerdispersion vor der Sprühtrocknung Siliciumoxid-Pulver zugegeben wird.

Die EP-A 601518 betrifft redispergierbare Polymerpulver auf der Basis von (Meth)acrylsäureestern, welche 1 bis 15 % ethylenisch ungesättigte Comonomereinheiten enthalten, und in Gegenwart von Polyvinylalkohol als Verdüsungshilfe getrocknet werden.

Überraschenderweise ist die Lösung der obengenannten Aufgabe mit Dispersionspulver von Alkoxysilan-funktionellen Copolymerisaten gelungen, obwohl vor dem eben diskutierten Hintergrund, bei der dazu erforderlichen Trocknung der Copolymerisat-Dispersionen in einem Temperaturbereich von 55 bis 100°C, die vollständige Vernetzung der Copolymerisate erwartet werden mußte.

Gegenstand der Erfindung sind in Wasser redispergierbare, vernetzbare Dispersionspulver auf der Basis von wasserunlöslichen Copolymerisaten von ethylenisch ungesättigten Monomeren sowie gegebenenfalls weiterer Zusatzstoffe wie Schutzkolloide und Antiblockmittel, erhältlich durch
a) Emulsionspolymerisation bei einem pH-Wert von 2 bis 9 eines Comonomergemisches enthaltend ein oder mehrere Comonomere aus der Gruppe umfassend Vinylester von unverzweigten oder verzweigten Alkylcarbonsäuren mit 1 bis 18 C-Atomen, Methacrylsäureester und Acrylsäureester von unverzweigten oder verzweigten Alkoholen mit 1 bis 18 C-Atomen, Olefine, Diene, Vinylaromaten, Vinylhalogenide und
   0.05 bis 15.0 Gew%, bezogen auf das Gesamtgewicht des Comonomergemisches, einer oder mehrerer Siliciumverbindungen der allgemeinen Formeln
   CH₂=CH-(CH₂)ₘ-SiR(OR')₂, mit m = 0 - 8,
   CH₂=CR"-CO₂-(CH₂)ₙSiR(OR')₂, mit n = 1 - 6, 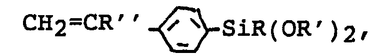 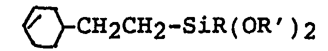 wobei R ein verzweigter oder unverzweigter, gegebenenfalls substituierter C₁-C₁₂-Alkylrest oder ein Phenylrest ist, R' gleich oder verschieden und ein verzweigter, unverzweigter oder cyclischer, gegebenenfalls substituierter C₂-C₆-Alkylrest ist, R" die Bedeutung H oder CH₃ hat, und die Gruppe -SiR(OR')₂ auch die Bedeutung 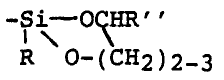 haben kann, und
b) Sprühtrocknung bei einem pH-Wert von 4 bis 8 der so erhaltenen wäßrigen Copolymerisat-Dispersion bei einer Austrittstemperatur von 55 bis 100°C, gegebenenfalls vor oder nach Zugabe der genannten Zusatzstoffe.

Bevorzugte Vinylester-Comonomere sind Vinylacetat, Vinylpropionat, Vinylbutyrat, Vinyl-2-ethylhexanoat, Vinyllaurat, 1-Methylvinylacetat, Vinylpivalat, Vinylester von α-verzweigten Monocarbonsäuren, beispielsweise Vinylester von α-verzweigten Monocarbonsäuren mit 9 C-Atomen (VeoVa9^{R}) oder Vinylester von α-verzweigten Monocarbonsäuren mit 10 C-Atomen (VeoVa10^{R}) und Methylnorbornancarbonsäure-Vinylester. Besonders bevorzugt ist Vinylacetat.

Bevorzugte Acrylsäureester oder Methacrylsäureester sind Methyl(meth)acrylat, Ethyl(meth)acrylat, n-Propyl(meth)acrylat, iso-Propyl(meth)acrylat, n-Butyl-(meth)acrylat, iso-Butyl(meth)acrylat, t-Butyl(meth)acrylat, Hexyl(meth)acrylat, Ethylhexyl(meth)acrylat, Cyclohexyl(meth)acrylat und Dodecyl(meth)acrylat. Besonders bevorzugt sind Methylacrylat, Methylmethacrylat, n-Butylacrylat und 2-Ethylhexylacrylat.

Geeignete Comonomere sind auch die Mono- und Diester von Fumarsäure und Maleinsäure. Bevorzugte Alkylreste in den Estergruppen für Fumar- und Maleinsäure sind Methyl-, Ethyl-, iso-Propyl-, n-Propyl-, n-Butyl-, iso-Butyl-, t-Butyl-, Hexyl-, Ethylhexyl-und Dodecyl-Reste.

Beispiele für Olefine und Diene sind Ethen, Propen bzw. Butadien und Isopren, wobei die Diene beispielsweise mit Styrol, (Meth)acrylsäureestern oder den Estern der Fumar- oder Maleinsäure copolymerisiert werden können. Beispiele für Vinylaromaten sind Styrol, Methylstyrol, Vinyltoluol. Als Vinylhalogenid wird Vinylchlorid bevorzugt.

In einer bevorzugten Ausführungsform werden bei der Herstellung der wasserunlöslichen Copolymerisate noch 0.05 bis 15 Gew%, bezogen auf das Gesamtgewicht des Comonomergemisches, Hiltsmonomere aus der Gruppe der ethylenisch ungesättigten Carbonsäuren, vorzugsweise Acrylsäure, Methacrylsäure, Crotonsäure, Fumarsäure, Maleinsäure; aus der Gruppe der ethylenisch ungesättigten Carbonsäureamide, vorzugsweise Acrylamid; aus der Gruppe der ethylenisch ungesättigten Sulfonsäuren bzw. deren Salze, z.B. Vinylsulfonsäure, copolymerisiert. Gegebenenfalls können auch bis zu 2 Gew%, vorzugsweise bis zu 0.5 % Gew%, jeweils bezogen auf das Gesamtgewicht des Comonomergemisches, Comonomere aus der Gruppe der mehrfach ethylenisch ungesättigten Comonomeren, beispielsweise Divinyladipat, Diallylmaleat, Allylmethacrylat oder Triallylcyanurat copolymerisiert werden.

Als Hilfsmonomere geeignet sind gegebenenfalls auch andere vernetzend wirkende Comonomere, beispielsweise Acrylamidoglykolsäure (AGA), Methylacrylamidoglykolatmethylether (MAGME), N-Methylolacrylamid (NMAA), N-Methylolmethacrylamid, N-Methylolallylcarbamat, Alkylether wie der Isobutylether oder Ester des N-Methylolacrylamids, des N-Methylolmethacrylamids oder des N-Methylolallylcarbamats, falls deren Zusatz aus anwendungstechnischen Gründen Vorteile erbringt. Falls diese vernetzenden Comonomere copolymerisiert werden, dann vorzugsweise in einer Menge von 0.05 bis 3.0 Gew%, bezogen auf das Gesamtgewicht des Comonomergemisches.

Besonders bevorzugte Siliciumverbindungen sind
CH₂=CH-(CH₂)₀₋₁-Si(CH₃)(OR')₂ und
CH₂=CR"-CO₂-(CH₂)₂₋₃-Si(CH₃)(OR')₂, wobei
R' gleich oder verschieden ist und ein Ethyl-, iso-Propyl-, n-Propyl-, n-Butyl-, iso-Butyl- oder t-Butylrest ist. Vorzugsweise ist R' gleich und ein n-Butyl-, iso-Butyl-, t-Butyl-, Cyclohexyl-Rest.
Als substituierte Reste R' sind solche bevorzugt, welche mit einer Alkoxygruppe substituiert sind. Beispiele hierfür sind Reste R' mit der Formel -(CHR‴)₂₋₃-O-CH₂R", wobei R‴ H, CH₃ oder C₂H₅ ist. Besonders bevorzugte substituierte Reste R' sind Methoxyethylen-, Ethoxyethylen-, Methoxypropylen-, Ethoxypropylen-Rest und der Rest 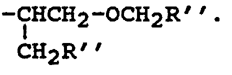 R" hat jeweils die vorgenannte Bedeutung H oder CH₃.

Am meisten bevorzugte Siliciumverbindungen sind Vinylmethyldiisopropoxy-Silan, Vinylmethyl-di-n-butoxy-Silan, Vinylmethyl-di-iso-butoxy-Silan, Vinylmethyl-di-t-butoxy-Silan, Vinylmethyl-di-cyclohexyloxy-Silan, Vinylmethyl-di-(1-methoxy-isopropyloxy)-Silan.

Soweit die genannten Siliciumverbindungen nicht kommerziell erhältlich sind, kann deren Herstellung mit literaturbekannten Verfahren erfolgen, wie sie in Noll, Chemie und Technologie der Silicone, 2. Auflage 1968, Weinheim und in Houben-Weyl, Methoden der organischen Chemie, Band E20, S. 1782f., 2219f., Georg Thieme Verlag, Stuttgart, 1987 beschrieben sind.

Die Siliciumverbindungen werden vorzugsweise in einer Menge von 0.2 bis 3.0 Gew%, bezogen auf das Gesamtgewicht des Comonomerengemisches, copolymerisiert.

Bevorzugt werden Comonomergemische bzw. Copolymerisate, welche neben den genannten Siliciumverbindungen noch folgende Comonomere oder Comonomereinheiten enthalten:
Vinylacetat;
Vinylacetat und Ethylen mit einem Ethylenanteil von 5 bis 50 Gew%;
Vinylacetat und 1 bis 30 Gew% Vinyllaurat oder Vinylester einer α-verzweigten Carbonsäure (VeoVa9^{R} oder VeoVa10^{R}) und 5 bis 40 Gew% Ethylen;
Vinylacetat und 1 bis 30 Gew% Vinyllaurat oder Vinylester einer α-verzweigten Carbonsäure (VeoVa9^{R} oder VeoVa10^{R}) ;
Vinylacetat und 1 bis 30 Gew% Acrylsäureester, insbesonders n-Butylacrylat oder 2-Ethylhexylacrylat;
Vinylacetat, 1 bis 30 Gew% Acrylsäureester, insbesonders n-Butylacrylat oder 2-Ethylhexylacrylat, sowie 5 bis 40 Gew% Ethylen;
Vinylacetat, 1 bis 30 Gew% Vinyllaurat oder Vinylester einer α-verzweigten Carbonsäure (VeoVa9^{R} oder VeoVa10^{R}), 1 bis 30 Gew% Acrylsäureester, insbesonders n-Butylacrylat oder 2-Ethylhexylacrylat, sowie 5 bis 40 Gew% Ethylen;
Vinylchlorid, 10 bis 40 Gew% Ethylen und 5 bis 40 Gew% Vinyllaurat oder Vinylester einer α-verzweigten Carbonsäure (VeoVa9^{R} oder VeoVa10^{R});
Methylmethacrylat und 35 bis 65 Gew% Acrylsäureester, insbesonders n-Butylacrylat und/oder 2-Ethylhexylacrylat;
Styrol und 35 bis 65 Gew% Acrylsäureester, insbesonders n-Butylacrylat und/oder 2-Ethylhexylacrylat.
Die Angaben in Gew% beziehen sich dabei jeweils auf das Gesamtgewicht des Comonomergemisches bzw. des Copolymerisats.

Die Herstellung der genannten, radikalisch polymerisierbaren, wasserunlöslichen Polymere erfolgt vorzugsweise nach dem Emulsionspolymerisationsverfahren. Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente(n).

Die Polymerisation wird vorzugsweise in einem Temperaturbereich von 0 bis 100°C durchgeführt und mit den für die Emulsionspolymerisation üblicherweise eingesetzten wasserlöslichen Radikalbildner eingeleitet, die vorzugsweise in Mengen von 0.01 bis 3.0 Gew%, bezogen auf das Gesamtgewicht der Monomeren, eingesetzt werden. Beispiele hierfür sind Ammonium-und Kaliumpersulfat; Wasserstoffperoxid, t-Butylperoxid; Alkylhydroperoxide, wie t-Butylhydroperoxid; Kalium-, Natrium- und Ammoniumperoxodiphosphat; Azoverbindungen, wie Azobisisobutyronitril oder Azobiscyanovaleriansäure. Gegebenenfalls können die genannten radikalischen Initiatoren auch in bekannter Weise mit 0.01 bis 1.0 Gew%, bezogen auf das Gesamtgewicht der Monomeren, Reduktionsmittel kombiniert werden. Geeignet sind zum Beispiel Alkali-Formaldehydsulfoxylate und Ascorbinsäure. Bei der Redoxinitiierung werden dabei vorzugsweise eine oder beide Redox-Katalysatorkomponenten während der Polymerisation dosiert.

Als Dispergiermittel können alle üblicherweise bei der Emulsionspolymerisation verwendeten Emulgatoren und/oder Schutzkolloide eingesetzt werden.

Gegebenenfalls werden 0.05 bis 3.0 Gew%, bezogen auf das Gesamtgewicht der Monomeren, an Emulgator eingesetzt. Geeignete Emulgatoren sind sowohl anionische, kationische als auch nichtionische Emulgatoren. Geeignete Emulgatoren sind dem Fachmann geläufig und finden sich beispielsweise in Houben-Weyl, Methoden der organischen Chemie, Bd. XIV, 1, Makromolekulare Stoffe, Georg Thieme Verlag, Stuttgart, 1961, 192-208. Bevorzugt sind solche die im Schutzkolloid nicht löslich sind.

Im allgemeinen wird in Gegenwart von Schutzkolloid polymerisiert, bevorzugt in Mengen von 3 bis zu 35 Gew%, bezogen auf das Gesamtgewicht der Monomeren. Beispiele hierfür sind Polyvinylalkohole und deren Derivate wie Vinylalkohol/Vinylacetat-Copolymere, Polyvinylpyrrolidone; Polysaccharide in wasserlöslicher, aus Viskositätsgründen vorzugsweise teilweise "abgebauter", Form wie Stärken (Amylose und Amylopectin), Cellulose, Tamarind, Dextran, Alginate und deren Carboxymethyl-, Methyl-, Hydroxyethyl-, Hydroxypropyl-Derivate; Proteine wie Casein, Sojaprotein, Gelatine; synthetische Polymere wie Poly(meth)acrylsäure, Poly(meth)acrylamid, Polyvinylsulfonsäuren und deren wasserlöslichen Copolymere; Melaminformaldehydsulfonate, Phenol- und Naphthalinformaldehydsulfonate, Styrolmaleinsäure- und VinylethermaleinsäureCopolymere.

Die Polymerisation wird bei eines pH von 2 bis 9, vorzugsweise von 4 bis 8, besonders bevorzugt 5 bis 7, durchgeführt. Spätestens nach Abschluß der Polymerisation wird der pH auf 4 bis 8, vorzugsweise 5.5 bis 7 eingestellt. Diesen pH sollte auch die zu verdüsende Mischung aufweisen.

Die Herstellung der Dispersionspulverzusammensetzung erfolgt mittels Sprühtrocknung. Die Trocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, Tg des Harzes und gewünschtem Trocknungsgrad, gewählt.

Vor der Sprühtrocknung wird die nach der Emulsionspolymerisation erhaltene Copolymerdispersion vorzugsweise auf einen Festgehalt von 20 bis 60 % eingestellt. Der Festgehalt ist abhängig von der Art und Menge weiterer Zusatzstoffe, welche bei der Trocknung zugegeben werden. Beispielsweise können der Dispersion noch weitere Mengen an Schutzkolloiden zugegeben werden. Die Gesamtmenge an Schutzkolloid vor dem Trocknungsvorgang sollte mindestens 6 Gew%, vorzugsweise mindestens 10 Gew%, bezogen auf das Copolymerisat, betragen.

Bei der Verdüsung hat sich vielfach ein Gehalt von bis zu 1.5 Gew% Antischaummittel, bezogen auf das Copolymerisat, als günstig erwiesen. Flüssige Antischaummittel werden normalerweise der Dispersion vor dem Trocknen zugesetzt, feste können in die trockene Dispersionspulverzusammensetzung eingemischt werden.

Die mittlere Teilchengröße der Dispersionspulverteilchen beträgt im allgemeinen 1 bis 1000 µm, vorzugsweise 10 bis 700 µm, besonders bevorzugt 50 bis 500 µm.

Zur Erhöhung der Lagerfähigkeit durch Verbesserung der Verblockungsstabilität, insbesonders bei Pulvern mit niedriger Glasübergangstemperatur, kann das erhaltene Pulver mit einem Antiblockmittel (Antibackmittel), vorzugsweise bis 30 Gew%, bezogen auf das Gesamtgewicht polymerer Bestandteile, versetzt werden. Dies erfolgt vorzugsweise, solange das Pulver noch fein verteilt ist, beispielsweise noch im Trockengas suspendiert ist. Insbesondere wird das Antiblockmittel zumindest teilweise getrennt aber gleichzeitig mit der Dispersion in die Trocknungsvorrichtung dosiert. Beispiele für Antiblockmittel sind fein gemahlene Aluminiumsilikate, Kieselgur, kolloidales Silicagel, pyrogene Kieselsäure, Fällungskieselsäure, Micro-Silica, Leichtspat, Kaolin, Talkum, Zemente, Diatomeenerde, Magnesiumcarbonat und/oder Calciumcarbonat oder Magnesiumhydrosilikat.

Weitere, in bevorzugten Ausführungsformen enthaltene Bestandteile der Dispersionspulverzusammensetzung sind beispielsweise Farbstoffe, Füllstoffe, Schaumstabilisatoren, Hydrophobierungsmittel, Kondensationskatalysatoren, Die Zugabe dieser Bestandteile kann vor oder auch nach der Sprühtrocknung erfolgen. Der Kondensationskatalysator, zur Beschleunigung der Vernetzung bei der Anwendung, wird nach der Sprübtrocknung zugegeben.

Die Dispersionspulverzusammensetzung kann in den dafür typischen Anwendungsbereichen eingesetzt werden. Beispielsweise in bauchemischen Produkten in Verbindung mit anorganischen, hydraulisch abbindenden Bindemitteln wie Zementen (Portland-, Aluminat-, Trass-, Hüllen-, Magnesia-, Phosphatzement), Gips, Wasserglas, für die Herstellung von Bauklebern, Putzen, Spachtelmassen, Fußbodenspachtelmassen, Fugenmörtel und Farben. Ferner als Alleinbindemittel für Beschichtungsmittel und Klebemittel oder als Bindemittel für Textilien. Vorzugsweise wird die Dispersionspulverzusammensetzung als Bindemittel in Anwendungsgebieten eingesetzt, in denen neben einer guten Haftung auch eine reduzierte Wasseraufnahme und/oder gute Lösungsmittelbeständigkeit erwünscht ist.

Die erfindungsgemäßen Redispersionspulver sind allenfalls leicht anvernetzte Produkte, die in Wasser gut redispergieren und bei der Anwendung in Pulverform oder als wäßrige Dispersion mechanisch feste, vernetzte Filme bilden. Im Gegensatz zu der Lehre des Stands der Technik sind diese Produkte ohne die Notwendigkeit der Cokondensation von Siloxanen während der radikalischen Polymerisation zugänglich.

### Beispiele:

Allgemeine Vorschrift für die in der Tabelle 1 aufgeführten Beispiele und Vergleichsbeispiele mit der Harzbasis Vinylacetat/n-Butylacrylat:

In einem mit Rührer und Thermometer ausgestatteten und thermostabilisierten 1.5 l Kessel wurde nach Einbringen von 545 g Wasser, 36.5 g Polyvinylalkohol G 04/140 (Wacker-Chemie GmbH, München) und 60 g einer Monomermischung aus 437.8 g Vinylacetat, 158.0 g n-Butylacrylat und Silan (Art und Menge gemäß Tabelle 1), die Vorlage auf 65°C erwärmt. Nun wurden die Katalysatorlösungen, eine 3.4 %-ige wäßrige t-Butylhydroperoxidlösung und eine 5 %-ige wäßrige Natriumformalde-hydsulfoxylatlösung (1 : 1) eingefahren. Fünf Minuten nach Reaktionsbeginn wurde mit der Dosierung der Restmenge des Monomergemisches begonnen. Die Dosierdauer betrug ca. zwei Stunden. Der pH während der Polymerisation und vor der Verdüsung ist in der Tabelle 1 angegeben.
Nach Abklingen der Reaktion wurde dreimal mit je 1 ml 10 %-iger H₂O₂-Lösung nachpolymerisiert. Der Festgehalt betrug zwischen 48.5 und 50.0 %. Der Restmonomergehalt lag bei ca. 0.3 %.

Im Vergleichsbeispiel 3, sowie im Beispiel 2 wurde das Silan zusammen mit den letzten 40 % des Vinylacetat/Butylacrylat-Gemisches dosiert. Im Vergleichsbeispiel 1 wurde kein Silan eingebaut. Es diente zur Bestimmung des "0-Werts" für den Vernetzungsgrad.

Vor dem Verdüsungsvorgang wurden der Dispersion 10 Gew% (fest auf fest) Polyvinylalkohol M 13/140 (Wacker-Chemie GmbH, München) in Form einer 11 %-igen wäßrigen Lösung zugemischt und die Mischung mit Wasser auf 33 % verdünnt.

Die Dispersionen wurde in einem Nubilosa-Sprühtrockner unter den folgenden Bedingungen verdüst.

| | |
|---|---|
| Eintrittstemperatur | ca. 112°C |
| | |
| Austrittstemperatur | 80°C |
| | |
| Preßluftdruck vor der 2-Stoffdüse | 4 bar |
| | |
| Durchhsatz | 1,5 l/h |

Nach der Verdüsung wurden dem Pulver 10 Gew% bezogen auf das sprühgetrocknete Produkt, eines handelsüblichen Antiblockmittels eingearbeitet. Das trockene Pulver war sehr gut rieselfähig und in Wasser sehr gut redispergierbar.

Zur Bestimmung der Vernetzung wurden die in Tetrahydrofuran löslichen Anteile aus ca. 500 mg des Dispersionsfilmes bzw. des Pulvers bestimmt. Die in Tetrahydrofuran unlöslichen Komponenten Polyvinylalkohol und Antiblockmittel wurden vor der Berechnung von der Einwaage abgezogen. Die Differenz der löslichen Anteile von der Gesamtmenge des eingewogenen wasserunlöslichen Harzanteils ist in der Tabelle als "% Vernetzung" angegeben.

Die Ergebnisse sind in der Tabelle 1 zusammengefaßt: Das Produkt aus Vergleichsbeispiel 1 ist unvernetzt, da es keinen Silananteil enthält. Der Wert von 57 % unlöslich in THF ist dadurch bedingt, daß die Teilchen von der Verdüsungshilfe Polyvinylalkohol umschlossen sind. Dieser Wert kann daher als Bezugswert für die Beurteilung der Vernetzung von Silanhaltigen Polymerisaten während der Polymerisation oder Sprühtrocknung dienen.
Während die nicht erfindungsgemäß silansubstituierten Polymerisate der Vergleichsbeispiele 2 und 3 nach der Sprühtrocknung vollständig vernetzt sind, ist bei den Beispielen 2 und 3 keine signifikante Vernetzung und bei Beispiel 1 nur eine leichte Anvernetzung feststellbar.

**TABELLE 1:**

| Beispiel | Silanmonomer | Gew% Silan | pH-Wert | | THF-unlösl.Gew%* |
|---|---|---|---|---|---|
| | | | Polymerisation | Verdüsung | |
| V.Bsp. 1 | - - - | - | 5.5 | 6.0 | 57.0** |
| V.Bsp. 2 | Vinyltriethoxy- | 2.0 | 6.0 | 6.0 | 98.5 |
| V.Bsp. 3 | Vinylmethyl-di-n-butoxy- | 2.6 | 2.5 | 2.5 | 96.0 |
| Bsp. 1 | Vinylmethyl-diethoxy- | 2.0 | 5.5 | 6.0 | 77.0 |
| Bsp. 2 | Vinylmethyl-( di-n-butoxy- | 2.6 | 5.5 | 6.0 | 65.0 |
| Bsp. 3 | Vinylmethyl-di-i-butoxy- | 2.6 | 5.5 | 6.0 | 61.0 |

| | | | | | |
|---|---|---|---|---|---|
| * abzüglich der in THF unlöslichen Zusatzstoffe, wie Polyvinylalkohol und Hydrite | | | | | |
| ** Nullwert: Das Produkt ist unvernetzt. Es scheint in THF nur teilweise unlöslich (hier 57 %), weil es von Polyvinylalkohol umschlossen ist. | | | | | |

Allgemeine Vorschrift für die in der Tabelle 2 aufgeführten Beispiele und Vergleichsbeispiele mit der Harzbasis Vinylacetat/Ethylen:

In einem 15 l Rührautoklaven wurden 4630 g Wasser, 78 g Polyvinylalkohol W 25/140 (Wacker-Chemie GmbH, München) und 230 g Polyvinylalkohol M 05/140 (Wacker-Chemie GmbH, München), 800 g Ethylen und ein Teil einer Monomermischung aus 2430 g Vinylacetat und Silan (Art und Menge gemäß Tabelle 2) vorgelegt und die Vorlage auf 50°C erwärmt. Nun wurden die Katalysatorlösungen, eine 6.0 %-ige wäßrige Natriumpersulfatlösung und eine 3 %-ige wäßrige Natriumformaldehydsulfoxylatlösung (1 : 1) eingefahren. Nach 1 Stunde Reaktionszeit wurde mit der Dosierung der Restmenge des Vinylacetat/Silan-Gemisches begonnen. Die Dosierdauer betrug ca. fünf Stunden. Nach 2 Stunden Nachpolymerisation wurde entspannt. Der Festgehalt betrug zwischen 50 und 51 %. Der Restmonomergehalt lag bei ca. 0.3 %.

In den Vergleichsbeispielen 4 und 5 wurde kein Silan eingebaut. Diese dienten zur Bestimmung des "0-Werts" für Pulverlöslichkeit und Filmvernetzung.

Vor dem Verdüsungsvorgang wurden der Dispersion 10 Gew% (fest auf fest) Polyvinylalkohol M 13/140 (Wacker-Chemie GmbH, München) in Form einer 11 %-igen wäßrigen Lösung zugemischt und die Mischung mit Wasser auf 33 % verdünnt.

Die Dispersionen wurde in einem Nubilosa-Sprühtrockner unter den vorgenannten Bedingungen getrocknet.

### Prüfmethoden:

Die Bestimmung der Löslichkeit der Dispersionspulver erfolgte analog der Bestimmung in Tabelle 1, mit dem Unterschied, daß DMF als Lösungsmittel eingesetzt wurde, und die Löslichkeit qualitativ beurteilt wurde.

Zusätzlich wurde die Vernetzbarkeit von Filmen geprüft, welche man durch Redispergierung der Pulver im Sauren oder Basischen in Wasser erhält.

Zur Überprüfung der Vernetzbarkeit im Basischen wurden 90 Teile Dispersionspulver zusammen mit 10 Teilen Calciumhydroxid in Wasser redispergiert.
Zur Überprüfung der Vernetzbarkeit im Sauren wurden 90 Teile Dispersionspulver in Wasser redispergiert und mit HCl ein pH von 2.0 eingestellt.
Mit den so erhaltenen Redispersionen wurden Filme gegossen und deren Löslichkeit in DMF qualitativ beurteilt.

Die Ergebnisse sind in Tabelle 2 zusammengefaßt:

Die Produkte der Vergleichsbeispiele 4 und 5, ohne Silananteil, waren in DMF vollständig löslich. Damit hergestellte Filme vernetzten weder im Sauren noch Basischen.

Die Produkte der Beispiele 4, 5 und 6 waren in DMF vollständig löslich. Damit hergestellte Filme vernetzten sowohl im Sauren als auch im Basischen.

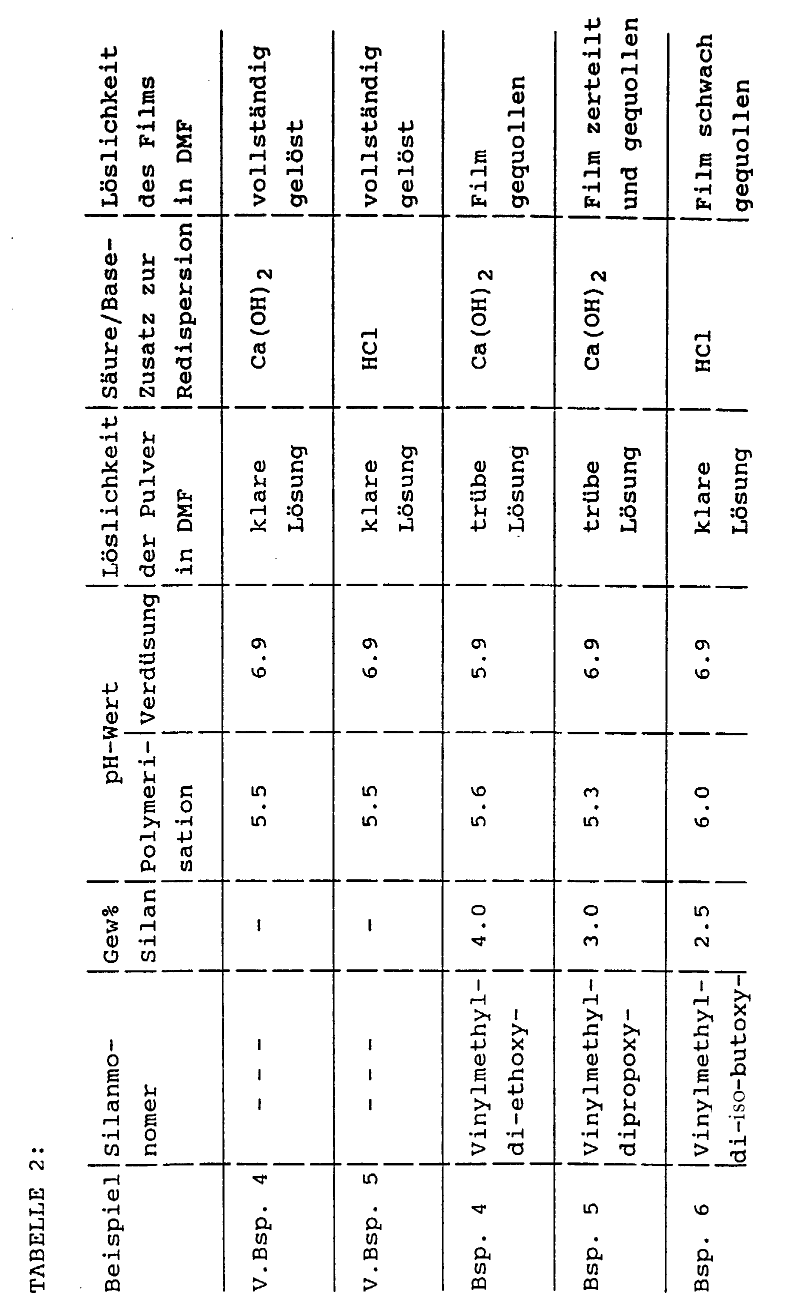

## Patentansprüche

1. In Wasser redispergierbare, vernetzbare Dispersionspulver auf der Basis von wasserunlöslichen Copolymerisaten von ethylenisch ungesättigten Monomeren sowie gegebenenfalls weiterer Zusatzstoffe wie Schutzkolloide und Antiblockmittel, erhältlich durch
a) Emulsionspolymerisation bei einem pH-Wert von 2 bis 9 eines Comonomergemisches enthaltend ein oder mehrere Comonomere aus der Gruppe umfassend Vinylester von unverzweigten oder verzweigten Alkylcarbonsäuren mit 1 bis 18 C-Atomen, Methacrylsäureester und Acrylsäureester von unverzweigten'oder verzweigten Alkoholen mit 1 bis 18 C- Atomen, Olefine, Diene, Vinylaromaten, Vinylhalogenide und
0.05 bis 15.0 Gew%, bezogen auf das Gesamtgewicht des Comonomergemisches, einer oder mehrerer Siliciumverbindungen der allgemeinen Formeln
CH₂=CH-(CH₂)ₘ-SiR(OR')₂, mit m = 0 - 8,
CH₂=CR"-CO₂-(CH₂)ₙ-SiR(OR')₂, mit n = 1 - 6, 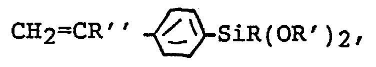 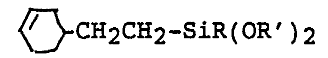 wobei R ein verzweigter oder unverzweigter, gegebenenfalls substituierter C₁-C₁₂-Alkylrest oder ein Phenylrest ist, R' gleich oder verschieden und ein verzweigter, unverzweigter oder cyclischer, gegebenenfalls substituierter C₂-C₆-Alkylrest ist, R" die Bedeutung H oder CH₃ hat, und die Gruppe -SiR(OR')₂ auch die Bedeutung 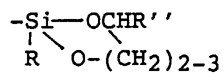 haben kann; und
b) Sprühtrocknung bei einem pH-Wert von 4 bis 8 der so erhaltenen wäßrigen Copolymerisat-Dispersion bei einer Austrittstemperatur von 55 bis 100°C, gegebenenfalls vor oder nach Zugabe der genannten Zusatzstoffe.

2. Dispersionspulver nach Anspruch 1, dadurch gekennzeichnet, daß das Comonomergemisch ein oder mehrere Siliciumverbindungen enthält, der allgemeinen Formeln
CH₂=CH-(CH₂)₀₋₁-Si(CH₃)(OR')₂ und
CH₂=CR"-CO₂-(CH₂)₂₋₃-Si(CH₃)(OR')₂, wobei
R' gleich oder verschieden ist und ein Ethyl-, iso-Propyl-, n-Propyl-, n-Butyl-, iso-Butyl-, t-Butyl- oder Cyclohexyl-Rest ist oder R' ein substituierter Alkylrest mit der allgemeinen Formel -(CHR‴)₂-₃-O-CH₂R" ist, wobei R‴ H, CH₃ oder C₂H₅ ist, und R" jeweils die Bedeutung H oder CH₃ hat.

3. Dispersionspulver nach Anspruch 1 oder 2, dadurch gekennzeichnet, daß das Comonomergemisch ein oder mehrere Siliciumverbindungen aus der Gruppe Vinylmethyl-diisopropoxy-Silan, Vinylmethyl-di-n-butoxy-Silan, Vinylmethyl-di-iso-butoxy-Silan, Vinylmethyl-di-t-butoxy-Silan, Vinylmethyl-di-cyclohexyloxy-Silan, Vinylmethyl-di-(1-methoxy-isopropyloxy)-Silan enthält.

4. Dispersionspulver nach Anspruch 1 bis 3, dadurch gekennzeichnet, daß das Comonomergemisch die Siliciumverbindungen in einer Menge von 0.2 bis 3.0 Gew%, bezogen auf das Gesamtgewicht des Comonomerengemisches, enthält.

5. Dispersionspulver nach Anspruch 1 bis 4, dadurch gekennzeichnet, daß das Comonomergemisch neben den genannten Siliciumverbindungen noch
Vinylacetat, oder
Vinylacetat und Ethylen mit einem Ethylenanteil von 5 bis 50 Gew%, oder
Vinylacetat und 1 bis 30 Gew% Vinyllaurat oder Vinylester einer α-verzweigten Carbonsäure mit 9 oder 10 C-Atomen und 5 bis 40 Gew% Ethylen, oder
Vinylacetat und 1 bis 30 Gew% Vinyllaurat oder Vinylester einer α-verzweigten Carbonsäure mit 9 oder 10 C-Atomen, oder
Vinylacetat, und 1 bis 30 Gew% Acrylsäureester, insbesonders n-Butylacrylat oder 2-Ethylhexylacrylat, oder
Vinylacetat, 1 bis 30 Gew% Acrylsäureester, insbesonders n-Butylacrylat oder 2-Ethylhexylacrylat, sowie 5 bis 40 Gew% Ethylen, oder
Vinylacetat, 1 bis 30 Gew% Vinyllaurat oder Vinylester einer α-verzweigten Carbonsäure mit 9 oder 10 C-Atomen, 1 bis 30 Gew% Acrylsäureester, insbesonders n-Butylacrylat oder 2-Ethylhexylacrylat, sowie 5 bis 40 Gew% Ethylen, enthält.

6. Dispersionspulver nach Anspruch 1 bis 4, dadurch gekennzeichnet, daß das Comonomergemisch neben den genannten Siliciumverbindungen noch
Vinylchlorid, 10 bis 40 Gew% Ethylen und 5 bis 40 Gew%
Vinyllaurat oder Vinylester einer α-verzweigten Carbonsäure mit 9 oder 10 C-Atomen enthält.

7. Dispersionspulver nach Anspruch 1 bis 4, dadurch gekennzeichnet, daß das Comonomergemisch neben den genannten Siliciumverbindungen noch
Methylmethacrylat und 35 bis 65 Gew% Acrylsäureester, insbesonders n-Butylacrylat und/oder 2-Ethylhexylacrylat, oder
Styrol und 35 bis 65 Gew% Acrylsäureester, insbesonders n-Butylacrylat und/oder 2-Ethylhexylacrylat,
enthält.

8. Verfahren zur Herstellung von in Wasser redispergierbaren, vernetzbaren Dispersionspulvern nach Anspruch 1 bis 7 durch
a) radikalische Emulsionspolymerisation bei einer Temperatur von 0 bis 100°C und bei einem pH-Wert von 2 bis 9 eines Comonomergemisches enthaltend ein oder mehrere Comonomere aus der Gruppe umfassend Vinylester von unverzweigten oder verzweigten Alkylcarbonsäuren mit 1 bis 18 C-Atomen, Methacrylsäureester und Acrylsäureester von unverzweigten oder verzweigten Alkoholen- mit 1 bis 18 C-Atomen, Olefine, Diene, Vinylaromaten, Vinylhalogenide und
0.05 bis 15.0 Gew%, bezogen auf das Gesamtgewicht des Comonomergemisches, einer oder mehrerer Siliciumverbindungen der allgemeinen Formeln
CH₂=CH-(CH₂)ₘ-SiR(OR')₂, mit m = 0 - 8,
CH₂=CR"-CO₂-(CH₂)ₙSiR(OR')₂, mit n = 1 - 6, 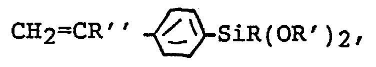 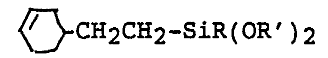 wobei R ein verzweigter oder unverzweigter, gegebenenfalls substituierter C₁-C₁₂-Alkylrest oder ein Phenylrest ist, R' gleich oder verschieden und ein verzweigter, unverzweigter oder cyclischer, gegebenenfalls substituierter C₂-C₆-Alkylrest ist, R" die Bedeutung H oder CH₃ hat, und die Gruppe -SiR(OR')₂ auch die Bedeutung 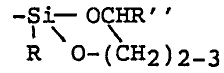 haben kann,
und
b) Sprühtrocknung der so erhaltenen wäßrigen Copolymerisat-Dispersion, mit einem pH-Wert von 4 bis 8, bei einer Austrittstemperatur von 55 bis 100°C, gegebenenfalls vor oder nach Zugabe der genannten Zusatzstoffe.

9. Verwendung von in Wasser redispergierbaren, vernetzbaren Dispersionspulvern nach Anspruch 1 bis 5 als Bindemittel in bauchemischen Produkten, als Bindemittel für Beschichtungsmittel und Klebemittel oder als Bindemittel für Textilien.

## Claims

1. Crosslinkable dispersion powders which are based on water-insoluble copolymers of ethylenically unsaturated monomers and, if appropriate, further additives, such as protective colloids and antiblocking agents, and are redispersible in water, obtainable by
a) emulsion polymerization, at a pH of 2 to 9, of a comonomer mixture comprising one or more comonomers from the group comprising vinyl esters of unbranched or branched alkylcarboxylic acids having 1 to 18 C atoms, methacrylic acid esters and acrylic acid esters of unbranched or branched alcohols having 1 to 18 C atoms, olefins, dienes, vinylaromatics and vinyl halides, and
0.05 to 15.0% by weight, based on the total weight of the comonomer mixture, of one or more silicon compounds of the general formulae
CH₂=CH-(CH₂)ₘ-SiR(OR')₂, where m = 0 - 8,
CH₂=CR"-CO₂-(CH₂)ₙSiR(OR')₂, where n = 1 - 6, 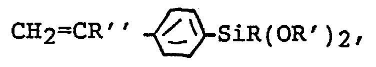 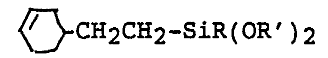 wherein R is a branched or unbranched, optionally substituted C₁-C₁₂-alkyl radical or a phenyl radical, R' is identical or different and is a branched, unbranched or cyclic, optionally substituted C₂-C₆-alkyl radical, R" has the meaning H or CH₃, and the group -SiR(OR')₂ can also have the meaning 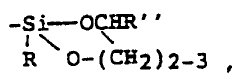 and
b) spray drying, at a pH of 4 to 8, the resulting aqueous copolymer dispersion at a discharge temperature of 55 to 100°C, if appropriate before or after addition of the additives mentioned.

2. Dispersion powder according to Claim 1, characterized in that the comonomer mixture comprises one or more silicon compounds of the general formulae
CH₂=CH-(CH₂)₀₋₁-Si(CH₃)(OR')₂ and
CH₂=CR"-CO₂-(CH₂)₂₋₃-Si(CH₃)(OR')₂, wherein R' is identical or different and is an ethyl, iso-propyl, n-propyl, n-butyl, iso-butyl, t-butyl or cyclohexyl radical, or R' is a substituted alkyl radical having the general formula (CHR‴)₂₋₃-O-CH₂R", wherein R‴ is H, CH₃ or C₂H₅, and R" in each case has the meaning H or CH₃.

3. Dispersion powders according to Claim 1 or 2, characterized in that the comonomer mixture comprises one or more silicon compounds from the group consisting of vinylmethyl-diisopropoxy-silane, vinylmethyl-di-n-butoxysilane, vinylmethyl-di-iso-butoxy-silane, vinylmethyl-di-t-butoxy-silane, vinylmethyl-di-cyclohexyloxy-silane and vinylmethyl-di-(1-methoxy-isopropyloxy)-silane.

4. Dispersion powders according to Claims 1 to 3, characterized in that the comonomer mixture comprises the silicon compounds in an amount of 0.2 to 3.0% by weight, based on the total weight of the comonomer mixture.

5. Dispersion powders according to Claims 1 to 4, characterized in that, in addition to the silicon compounds mentioned, the comonomer mixture also comprises vinyl acetate, or
vinyl acetate and ethylene with an ethylene content of 5 to 50% by weight, or
vinyl acetate and 1 to 30% by weight of vinyl laurate or a vinyl ester of an α-branched carboxylic acid having 9 or 10 C atoms and 5 to 40% by weight of ethylene, or
vinyl acetate and 1 to 30% by weight of vinyl laurate or a vinyl ester of an α-branched carboxylic acid having 9 or 10 C atoms, or
vinyl acetate, and 1 to 30% by weight of an acrylic acid ester, in particular n-butyl acrylate or 2-ethylhexyl acrylate, or
vinyl acetate, 1 to 30% by weight of an acrylic acid ester, in particular n-butyl acrylate or 2-ethylhexyl acrylate, and 5 to 40% by weight of ethylene, or
vinyl acetate, 1 to 30% by weight of vinyl laurate or a vinyl ester of an α-branched carboxylic acid having 9 or 10 C atoms, 1 to 30% by weight of an acrylic acid ester, in particular n-butyl acrylate or 2-ethylhexyl acrylate, and 5 to 40% by weight of ethylene.

6. Dispersion powders according to Claims 1 to 4, characterized in that, in addition to the silicon compounds mentioned, the comonomer mixture also comprises vinyl chloride, 10 to 40% by weight of ethylene and 5 to 40% by weight of vinyl laurate or a vinyl ester of an α-branched carboxylic acid having 9 or 10 C atoms.

7. Dispersion powders according to Claims 1 to 4, characterized in that, in addition to the silicon compounds mentioned, the comonomer mixture also comprises methyl methacrylate and 35 to 65% by weight of an acrylic acid ester, in particular n-butyl acrylate and/or 2-ethylhexyl acrylate, or styrene and 35 to 65% by weight of an acrylic acid ester, in particular n-butyl acrylate and/or 2-ethylhexyl acrylate.

8. Process for the preparation of crosslinkable dispersion powders which are redispersible in water according to Claims 1 to 7, by
a) free radical emulsion polymerization, at a temperature of 0 to 100°C and at a pH of 2 to 9, of a comonomer mixture comprising one or more comonomers from the group comprising vinyl esters of unbranched or branched alkylcarboxylic acids having 1 to 18 C atoms, methacrylic acid esters and acrylic acid esters of unbranched or branched alcohols having 1 to 18 C atoms, olefins, dienes, vinylaromatics and vinyl halides, and
0.05 to 15.0% by weight, based on the total weight of the comonomer mixture, of one or more silicon compounds of the general formulae
CH₂=CH-(CH₂)ₘ-SiR(OR')₂, where m = 0 - 8,
CH₂=CR"-CO₂-(CH₂)ₙSiR(OR')₂, where n = 1 - 6, 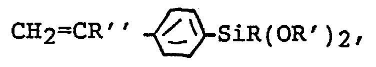 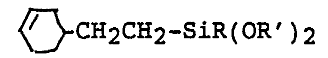 wherein R is a branched or unbranched, optionally substituted C₁-C₁₂-alkyl radical or a phenyl radical, R' is identical or different and is a branched, unbranched or cyclic, optionally substituted C₂-C₆-alkyl radical, R'' has the meaning H or CH₃, and the group -SiR(OR')₂ can also have the meaning 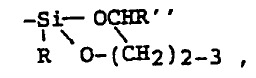 and
b) spray drying, at a pH of 4 to 8, the resulting aqueous copolymer dispersion at a discharge temperature of 55 to 100°C, if appropriate before or after addition of the additives mentioned.

9. Use of crosslinkable dispersion powders which are redispersible in water according to Claims 1 to 5, as binders in construction chemical products, as binders for coating compositions and adhesives or as binders for textiles.

## Revendications

1. Poudres de dispersion réticulables redispersables dans l'eau, à base de copolymères insolubles dans l'eau de monomères éthyléniquement insaturés ainsi que, le cas échéant, d'autres additifs comme des colloïdes protecteurs et des agents antiblocage, pouvant être obtenues par
a) polymérisation en émulsion, à un pH de 2 à 9, d'un mélange de comonomères contenant un ou plusieurs comonomères du groupe comprenant des esters de vinyle d'acides alkylcarboxyliques non ramifiés ou ramifiés avec 1 à 18 atomes de carbone, des esters de l'acide méthacrylique et des esters de l'acide acrylique d'alcools non ramifiés ou ramifiés avec 1 à 18 atomes de carbone, des oléfines, des diènes, des vinylaromatiques, des halogénures de vinyle, et
0,05 à 15,0% en poids, sur la base du poids total du mélange de comonomères, de un ou de plusieurs composés de silicium de formules générales
CH₂=CH-(CH₂)ₘ-SiR(OR')₂, avec m = 0 - 8,
CH₂=CR"-CO₂-(CH₂)ₙSiR(OR')₂, avec n = 1 - 6, 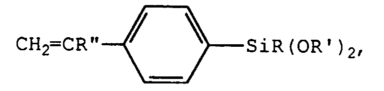 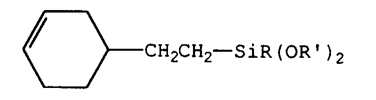 dans lesquelles R est un radical alkyle an C₁-C₁₂ ramifié ou non ramifié, le cas échéant substitué, ou un radical phényle, R' est identique ou différent et est un radical alkyle en C₂-C₆ ramifié, non ramifié ou cylique, le cas échéant substitué, R" signifie H ou CH₃, et le groupement -SiR(OR')₂ peut également signifier 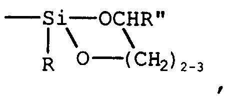 et
b) séchage par pulvérisation, à un pH de 4 à 8, de la dispersion aqueuse de copolymère ainsi obtenue à une température de sortie de 55 à 100°C, le cas échéant avant ou après addition des additifs cités.

2. Poudres de dispersion suivant la revendication 1, caractérisées en ce que le mélange de comonomères contient un ou plusieurs composés de silicium, de formules générales CH₂=CH-(CH₂)₀₋₁-Si(CH₃)(OR')₂ et CH₂=CR"-CO₂-(CH₂)₂₋₃-Si(CH₃)(OR')₂, dans lesquelles R' est identique ou différent et est un radical éthyle, isopropyle, n-propyle, n-butyle, isobutyle, t-butyle ou cyclohexyle, ou R' est un radical alkyle substitué de formule générale -(CHR‴)₂₋₃-O-CH₂R", dans laquelle R‴ est H, CH₃ ou C₂H₅ et R" signifie dans chaque cas H ou CH₃.

3. Poudres de dispersion suivant la revendication 1 ou 2, caractérisées en ce que le mélange de comonomères contient un ou plusieurs composés de silicium du groupe vinylméthyl-diisopropoxysilane, vinylméthyl-di-n-butoxysilane, vinylméthyldiisobutoxysilane, vinylméthyl-di-t-butoxysilane, vinylméthyldicyclohexyloxysilane, vinylméthyldi(1-méthoxyisopropyloxy)silane.

4. Poudres de dispersion suivant les revendications 1 à 3, caractérisées en ce que le mélange de comonomères contient les composés de silicium dans une quantité de 0,2 à 3,0% en poids, sur la base du poids total du mélange de comonomères.

5. Poudres de dispersion suivant les revendications 1 à 4, caractérisées en ce que le mélange de comonomères, outre les composés de silicium cités, contient encore
de l'acétate de vinyle, ou
de l'acétate de vinyle et de l'éthylène avec une proportion d'éthylène de 5 à 50% en poids, ou
de l'acétate de vinyle et 1 à 30% en poids de laurate de vinyle ou d'ester de vinyle d'un acide carboxylique α-ramifié avec 9 ou 10 atomes de carbone et 5 à 40% en poids d'éthylène, ou
de l'acétate de vinyle et 1 à 30% en poids de laurate de vinyle ou d'ester de vinyle d'un acide carboxylique α-ramifié avec 9 ou 10 atomes de carbone, ou
de l'acétate de vinyle, et 1 à 30% en poids d'ester d'acide acrylique, en particulier d'acrylate de n-butyle ou d'acrylate de 2-éthylhexyle, ou
de l'acétate de vinyle, 1 à 30% en poids d'ester d'acide acrylique, en particulier d'acrylate de n-butyle ou d'acrylate de 2-éthylhexyle, ainsi que 5 à 40% en poids d'éthylène, ou
de l'acétate de vinyle, 1 à 30% en poids de laurate de vinyle ou d'ester de vinyle d'un acide carboxylique α-ramifié avec 9 ou 10 atomes de carbone, 1 à 30% en poids d'ester d'acide acrylique, en particulier d'acrylate de n-butyle ou d'acrylate de 2-éthylhexyle, ainsi que 5 à 40% en poids d'éthylène.

6. Poudres de dispersion suivant les revendications 1 à 4, caractérisées en ce que le mélange de comonomères, outre les composés de silicium cités, contient encore
du chlorure de vinyle, 10 à 40% en poids d'éthylène et 5 à 40% en poids de laurate de vinyle ou d'ester de vinyle d'un acide carboxylique α-ramifié avec 9 ou 10 atomes de carbone.

7. Poudres de dispersion suivant les revendications 1 à 4, caractérisées en ce que le mélange de comonomères, outre les composés de silicium cités, contient encore
du méthacrylate de méthyle et 35 à 65% en poids d'ester d'acide acrylique, en particulier d'acrylate de n-butyle et/ou d'acrylate de 2-éthylhexyle, ou
du styrène et 35 à 65% en poids d'ester d'acide acrylique, en particulier d'acrylate de n-butyle et/ou d'acrylate de 2-éthylhexyle.

8. Procédé de préparation de poudres de dispersion réticulables redispersables dans l'eau suivant les revendications 1 à 7, par
a) polymérisation radicalaire en émulsion à une température de 0 à 100°C et à un pH de 2 à 9 d'un mélange de comonomères contenant un ou plusieurs comonomères du groupe comprenant des esters de vinyle d'acides alkycarboxyliques non ramifiés ou ramifiés avec 1 à 18 atomes de carbone, des esters de l'acide méthacrylique et des esters de l'acide acrylique d'alcools non ramifiés ou ramifiés avec 1 à 18 atomes de carbone, des oléfines, des diènes, des vinylaromatiques, des halogénures de vinyle, et
0,05 à 15,0% en poids, sur la base du poids total du mélange de comonomères d'un ou de plusieurs composés de silicium de formules générales
CH₂=CH-(CH₂)ₘ-SiR(OR')₂, avec m = 0 - 8,
CH₂=CR"-CO₂-(CH₂)ₙSiR(OR')₂, avec n = 1 - 6, 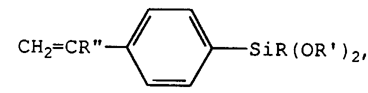 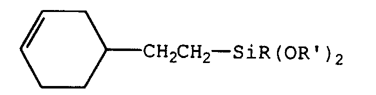 dans lesquelles R est un radical alkyle en C₁-C₁₂ ramifié ou non ramifié, le cas échéant substitué ou un radical phényle, R' est identique ou différent et est un radical alkyle en C₂-C₆ ramifié, non ramifié ou cyclique, le cas échéant substitué, R" signifie H ou CH₃, et le groupement -SiR(OR')₂ peut également signifier 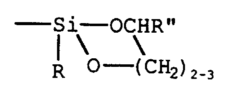 et
b) séchage par pulvérisation à un pH de 4 à 8, de la dispersion aqueuse de copolymère ainsi obtenue, à une température de sortie de 55 à 100°C, le cas échéant avant ou après addition des additifs cités.

9. Utilisation des poudres de dispersion réticulables redispersables dans l'eau suivant les revendications 1 à 5, comme liants dans des produits chimiques pour la construction, comme liants pour des moyens de revêtement et des adhésifs ou comme liants pour textiles.
